# EUROPÄISCHE PATENTSCHRIFT

(11) **EP 1 150 018 B1**
(45) Veröffentlichungstag und Bekanntmachung des Hinweises auf die Patenterteilung: **09.11.2005**
(21) Anmeldenummer: 01108360.7
(22) Anmeldetag: 03.04.2001
(51) Int. Cl.: F15B 15/12, F16J 15/54, F16J 15/32

(54) **Dichtungselement für einen Schwenkmotor**
Seal element for a rotary vane actuator
Elément d'étanchéité pour un vérin rotatif

(30) Priorität: 29.04.2000 DE 10021138
(43) Veröffentlichungstag der Anmeldung: 31.10.2001
(73) Patentinhaber: Bayerische Motoren Werke Aktiengesellschaft, 80809 München (DE)
(72) Erfinder: Van der Knaap, Albert, 2924 TM Krimpen aan den Ijssel (NL); Nagy, Imre, 85386 Eching (DE); Engelmohr, Franz, 82140 Olching (DE); Gorski, Ekkehard, 81827 München (DE); Benedek, Andreas, Dr., 85716 Unterschleissheim (DE)

(56) Entgegenhaltungen:
- DE-A- 4 229 025
- DE-C- 4 337 815
- US-A- 3 277 796
- US-A- 3 937 130

## Beschreibung

Die Erfindung betrifft ein Dichtungselement für einen Schwenkmotor zur Abdichtung von zwischen einem insbesondere zylindrischen Außenteil und einem insbesondere zylindrischen Innenteil desselben begrenzten Arbeitskammern, wobei das Dichtungselement in einer axial verlaufenden Nut aufgenommen ist, die in einem am Innenumfang des Außenteils oder am Außenumfang des Innenteils angeordneten Vorsprung ausgebildet ist, und wobei das Dichtungselement in Radialrichtung des Schwenkmotors betrachtet einen zwischen dem Außenteil und dem Innenteil eingespannten Gleitrahmen aus Kunststoff, insbesondere PTFE, sowie ein von diesem umgebenes Dichtungs-Innenteil aufweist.

Ein derartiges Dichtungselement ist zusammen mit dem zugehörigen Schwenkmotor in der DE 43 37 815 C1 gezeigt. Bezüglich des Aufbaus eines Schwenkmotors sowie der Anordnung eines erfindungsgemäßen Dichtelementes in diesem wird ausdrücklich auf diese genannte Schrift verwiesen, weshalb im weiteren nicht näher auf den grundsätzlichen Aufbau eines bzw. des Schwenkmotors eingegangen wird. Ein Dichtelement, auf welches sich die vorliegende Erfindung bezieht, wird somit bei einem Schwenkmotor verwendet, der zwischen einem zylindrischen Außenteil und einem zylindrischen Innenteil mehrere Arbeitskammern bildet, die in Axialrichtung des Schwenkmotors von Stirnwänden und in Umfangsrichtung von derartigen Dichtungselementen voneinander getrennt sind, welche in radialen Ausnehmungen oder Nuten angeordnet sind, die sich in sog. Vorsprüngen befinden, die entweder von einer Außenfläche des Innenteils radial nach außen zu einer Innenfläche des Außenteils oder von der Innenfläche des Außenteils radial nach innen zu der Außenfläche des Innenteils gerichtet sind.

Beim bekannten Stand der Technik ist ein ring- bzw. rahmenförmig ausgebildetes Dichtungselement ist in jeder genannten Ausnehmung oder Nut etwa in einer radialen Ebene angeordnet und nimmt in seiner inneren Öffnung ein Dichtungs-Innenteil auf, das auf den Außenumfang des Dichtungselements eine elastisch vergrößernde Vorspannkraft bewirkt, unter der das Dichtungselement quasi zwischen der Außenfläche des Innenteils und der Innenfläche des Außenteils eingespannt wird, so daß das Dichtungselement an den genannten Flächen möglichst abdichtend anliegt. Durch dieses Dichtungselement werden bekanntermaßen die sog. komplementären Arbeitskammern des Schwenkmotors, in denen sich ein Hydraulikmedium unter mehr oder weniger hohem Druck befindet, gegeneinander abgedichtet.

Im bekannten Stand der Technik ist die radiale Ausnehmung oder Nut in den genannten radialen Vorsprüngen breiter als das Dichtungselement ausgebildet und nimmt ein Füllstück auf, an dem sich das Dichtungselement in Umfangsrichtung des Schwenkmotors abstützt. Ein ring- oder rahmenförmiger Gleitrahmen des Dichtungselementes kann dabei aus einem Kunststoff gefertigt sein, der durch seine Elastizität in begrenztem Umfang ein elastisches Anpassen des Dichtungselementes an die betreffenden Dichtflächen, nämlich die besagte Innenfläche und Außenfläche, ermöglicht. Innerhalb dieses Gleitrahmens befindet sich bei der DE 43 37 815 C1 neben einem O-Ring als elastisches Vorspannelement für den Gleitrahmen ein sog. Füllstück aus Metall oder Kunststoff.

Während der Gleitrahmen im bekannten Stand der Technik bspw. aus dem Werkstoff PTFE (Polytetrafluorethylen) und das Dichtungs-Innenteil ebenfalls aus Kunststoff oder aus Metall hergestellt ist, besteht der Schwenkmotor selbst, d.h. dessen Gehäuse oder Außenteil sowie dessen Motorwelle oder Innenteil üblicherweise aus einem metallischen Werkstoff. Bekanntermaßen unterscheiden sich die Wärmeausdehnungskoeffizienten dieser verschiedenartigen Werkstoffe voneinander. So liegt der für die Schwenkmotor-Teile relevante thermische Ausdehnungskoeffizient α_{Stahl} von Stahl in der Größenordnung von 12•10⁻⁶ 1/K, während der für den Dichtungs-Gleitrahmen relevante thermische Ausdehnungskoeffizient α_{PTFE} von PTFE in der Größenordnung von 100•10⁻⁶ 1/K liegt.

Wird nun ein derartiger Schwenkmotor über einer relativ großen Temperaturspanne eingesetzt, so schrumpft bei einem auf eine Erwärmung folgenden Abkühlvorgang der Gleitrahmen in wesentlich stärkerem Maße als das Gehäuse (= Außenteil) und die Welle (= Innenteil) des Schwenkmotors. Hierdurch kann nicht nur der grundsätzlich elastische O-Ring zwischen dem Dichtungs-Gleitrahmen und dem Dichtungs-Innenteil bis über seine Elastizitätsgrenze hinaus überdrückt werden, sondern es können sich auch unerwünschte Spalte zwischen dem Dichtungselement und den Wänden der bereits besagten nutenförmigen Ausnehmung, welche vom Außenteil sowie vom Innenteil des Schwenkmotors begrenzt wird und welche das Dichtungselement aufnimmt, bilden. Solche Spalte verursachen dann unerwünschte Leckageverluste im Schwenkmotor, denn insbesondere bei tieferen Temperaturen sind dann die einander benachbarten Arbeitskammern des Schwenkmotors nicht ausreichend gegeneinander abgedichtet bzw. voneinander getrennt.

Grundsätzlich muß das Dichtungs-Innenteil intern dicht sein und darf deswegen keine freie Verbindung zwischen den abzudichtenden Arbeitskammern ermöglichen. Hierdurch wird die Gestaltungsfreiheit des Dichtungs-Innenteils stark eingeschränkt. Außerdem wird, um das Dichtungs-Innenteil abzudichten, im bekannten Stand der Technik ein Elastomer verwendet, und zwar insbesondere in Form des genannten O-Ringes. Das Verhalten eines Elastomers ist jedoch sehr temperaturempfindlich, was Auswirkungen auf das Leckageverhalten hat. Ferner ist die Verwendung von Elastomeren insbesondere zur Erzielung der geforderten Federwirkung bzw. Vorspannkraft problematisch hinsichtlich der Lebensdaueranforderung, nämlich bezüglich Alterung und mechanischer Belastbarkeit. Bei der beschriebenen Lösung gemäß dem Stand der Technik, bei welchem das Elastomer im Kraftschluß zwischen dem Dichtungs-Innenteil und dem genannten Gleitrahmen zum Tragen kommt, ist eine optimale Druckverteilung unabhängig von Temperatur und Lebensdauer auf dem (PTFE-)Gleitrahmen nicht realisierbar. Auch die Optimierung des Reibverhaltens des Dichtungselementes gegenüber dem relativ hierzu bewegten Teil des Schwenkmotors ist hierdurch eingeschränkt.

Im übrigen werden beim bekannten Stand der Technik zur Gestaltung des Dichtungs-Innenteils meistens zwei oder mehr Elemente unter Vorspannung eingesetzt. Das erschwert die Schwenkmotormontage und den Umgang mit den Dichtungen. Außerdem sind beim Stand der Technik keine Maßnahmen zur Reduzierung des Schrumpf- und Dehnverhaltens des Kunststoff-Gleitrahmens über der Temperatur ausgeführt, was eine weitere Einschränkung in der Feinabstimmung der Vorspannkraft und damit der Optimierung des Reibungsverhaltens bedeutet.

Der vorliegenden Erfindung liegt daher die Aufgabe zugrunde, ein demgegenüber verbessertes Dichtungselement nach dem Oberbegriff des Anspruchs 1 aufzuzeigen.
Zur Lösung dieser Aufgabe ist vorgesehen, daß die Außenkontur des in Radialrichtung sowie in Axialrichtung des Schwenkmotors einlagigen, zumindest teilweise federelastischen, nicht elastomeren Dichtungs-Innenteils der Innenkontur des Gleitrahmens entspricht und an dieser direkt anliegt. Vorteilhafte Ausgestaltungen der Erfindung sind Inhalt der Unteransprüche.

Durch die erfindungsgemäße Ausgestaltung mit den Merkmalen des Patentanspruchs 1, bei der (zumindest zur Erzeugung der Vorspannkraft oder Federwirkung des Dichtungs-Innenteiles bezüglich des Gleitrahmens) keine Elastomere zur Anwendung kommen, wird zunächst eine kostengünstig herstellbare und einfach montierbare Lösung geschaffen, die eine verbesserte Lebensdauer und höhere mechanische Belastbarkeit als die aus dem Stand der Technik bekannte Lösung aufweist. Dabei ist aufgrund des Wegfalls von (federnden) Elastomerelementen die im Gleitrahmen auftretende Druckverteilung unabhängig von der aktuellen Temperatur und insbesondere auch von der Lebensdauer bzw. von der Betriebszeit des Dichtungselementes.

Durch die Verwendung des Kunststoff- bzw. PTFE-Gleitrahmens werden jedoch weiterhin gute Laufeigenschaften und eine gute Abdichtfunktion erzielt. Insbesondere geht dies auf die zumindest teilweise federelastische Ausbildung des Dichtungs-Innenteils zurück, welche dem Dichtungselement eine Vorspannung verleiht bzw. eine solche dem Gleitrahmen aufprägt. Durch entsprechende Gestaltung bzw. Formgebung des Dichtungs-Innenteiles kann dabei dessen federelastische Eigenschaft hinsichtlich der gewünschten Vorspannkraft und Steifigkeit optimiert zu werden, ohne daß dieses selbst eine Abdichtfunktion übernehmen muß.

Erzeugbar bzw. realisierbar ist die gewünschte federelastische Eigenschaft des Dichtungs-Innenteiles bevorzugt dadurch, daß dieses definierte, geeignet verlaufende Schlitze und/oder Durchbrechungen aufweist. Durch eine im wesentlichen in Axialrichtung des Schwenkmotors verlaufende schlitzförmige Durchbrechung bzw. einen derartigen Durchbruch ist eine gewisse Federelatizität in Radialrichtung des Schwenkmotors erzielbar. Ein im wesentlichen in Radialrichtung des Schwenkmotors verlaufender bevorzugt schlitzförmiger Durchbruch im Dichtungs-Innenteil erzeugt eine bestimmte Federwirkung oder Federelatizität in Axialrichtung des Schwenkmotors. Durch Festlegung geeigneter Durchbrechungen ist somit die Federfunktion definiert einstellbar.

Beispielsweise können hierzu neben Längsschlitzen auch T-förmige oder H-förmige Durchbrechungen bzw. Durchbrüche im dann zumindest teilweise federelastischen Dichtungs-Innenteil vorgesehen sein, wobei es durchaus möglich ist, die Federelastizität des Dichtungs-Innenteiles derart zu gestalten, daß dieses über seinem Umfang, eine unterschiedliche Steifigkeit aufweist, d.h. daß die Federelastizität in Radialrichtung des Schwenkmotors sich von derjenigen in Schwenkmotor-Axialrichtung unterscheidet. Dadurch kann die Druckverteilung auf den Gleitrahmen praktisch in allen Richtungen wie gewünscht eingestellt, d.h. optimiert werden, zum Beispiel in Form einer in Radialrichtung des Schwenkmotors weichen und in Schwenkmotor-Axialrichtung steifen Einstellung.

Da - wie bereits erwähnt wurde - als Material für das Dichtungs-Innenteil (zumindest zur Erzeugung der gewünschten Federwirkung und daher für das sog. Federelement des Dichtungs-Innenteiles) kein Elastomer eingesetzt wird, ist auch keine Hysterese in der Steifigkeitskennlinie dieses teilweise federelastischen Dichtungs-Innenteiles zu erwarten, so daß eine derartige Ausführung deswegen die besten Voraussetzungen für optimale Reibungs- und Dichtungseigenschaften des Schwenkmotors schafft. Beispielsweise (bzw. bevorzugt) kann das Dichtungs-Innenteil aus einem metallischen Werkstoff gefertigt sein, daneben ist jedoch die Verwendung geeigneter Kunststoffe, insbesondere faserverstärkter Kunststoffe (CFK) möglich.

An einem erfindungsgemäßen Dichtungs-Innenteil können jedoch ebenfalls elastomere Werkstoffe eingesetzt werden, allerdings nicht zur Erzielung der gewünschten Federelastizität. Vielmehr können die Durchbrechungen oder Durchbrüche oder Schlitze im Dichtungs-Innenteil mittels derartiger elastomerer (oder anderer geeigneter) Werkstoffe abgedichtet werden. Eine derartige Abdichtung ist nämlich erforderlich, um zu verhindern, daß über diese Durchbrüche oder Durchbrechungen oder Schlitze eine Verbindung zwischen den beiden durch das Dichtungselement voneinander zu trennenden, sog. komplementären Arbeitskammern des Schwenkmotors besteht. Abweichend vom bekannten Stand der Technik dient dabei der ggf. elastomere Werkstoff jedoch lediglich der Abdichtung, so daß keine nennenswerten Alterungserscheinungen oder ähnliche o.g. Probleme (Temperaturabhängigkeit u.a.) zu befürchten sind.

Neben der Abdichtung der Schlitze oder Durchbrechungen durch Auftragen oder Einfügen eines geeigneten Dichtmaterials bestehen jedoch noch weitere Möglichkeiten. So kann, um zu verhindern, daß durch die genannten Längsschlitze oder Durchbrechungen Hydraulikmedium von der einen Arbeitskammer des Schwenkmotors in die andere Arbeitskammer gelangt, zur seitlichen Abdichtung des Dichtungselementes zumindest eine Scheibe an der Dichtelement-Längsseite angeordnet und ggf. geeignet befestigt werden. Bveorzugt werden jedoch zwei Scheiben, d.h. jeweils eine Scheibe an jeder der beiden Längsseiten des Dichtungselementes vorgesehen, da hiermit zum einen eine verbesserte Dichtwirkung erzielbar ist. Insbesondere ist es dann nicht erforderlich, diese Scheiben am Dichtungselement selbst zu befestigen, sondern diese Scheiben können in der das Dichtungselement aufnehmenden Nut des Schwenkmotors beidseitig desselben quasi schwimmend gelagert sein. Alleine durch den in den Arbeitskammern des Schwenkmotors anliegenden Hydraulikdruck werden die Scheiben dann derart gegen das Dichtungselement bzw. gegen dessen Gleitrahmen gepreßt, daß jeglicher Fluiddurchtritt durch die im Dichtungs-Innenteil vorgesehenen Schlitze, Durchbrüche oder dgl. unterbunden wird. Selbstverständlich sollten die Scheiben oder sog. Beilegscheiben, die beispielsweise aus Messing oder Teflon (PTFE) hergestellt sein können, hierfür derart dimensioniert sein, daß sie den Gleitrahmen zumindest teilweise überdecken, d.h. über dessen gesamtem Umfang auf diesem aufliegen. Vorteilhafterweise wird durch den Einsatz der Beilegscheiben die Dichtungsmontage vereinfacht und das Risiko vermindert, den Gleitrahmen während der Montage zu beschädigen.

Eine vorteilhafte Ausführungsform der Erfindung sieht vor, daß der Gleitrahmen zumindest einen zumindest teilweise in Umfangsrichtung des Schwenkmotors verlaufenden Schlitz aufweist. Bevorzugt sind quasi paarweise in einander gegenüberliegenden Kanten bzw. Seitenflächen des Gleitrahmens derartige Schlitze vorgesehen, die bevorzugt schräg, d.h. nicht exakt in Umfangsrichtung, sondern auch teilweise in Radialrichtung des Schwenkmotors verlaufen. Hierdurch wird das Temperaturdehnungsverhalten des Gleitrahmens verbessert, da sich das bspw. metallische Dichtungs-Innenteil entsprechend ausdehnen kann. Der Gleitrahmen kann hierdurch bei Temperaturveränderung nahezu ungehindert schrumpfen bzw. sich ungehindert dehnen, ohne hierdurch das Dichtungs-Innenteil mit zusätzlichen Kräften zu beanspruchen.

In Verbindung mit den genannten Schlitzen im Gleitrahmen, mit Hilfe derer auch die Anpreßkraft des Gleitrahmens bei Temperaturänderungen im wesentlichen unverändert bleibt, sieht eine vorteilhafte Weiterbildung der Erfindung vor, daß der oder die Schlitz(e) unterbrochen, d.h. nicht durchgehend ist/sind und sich somit nicht über die gesamte Breite des Gleitrahmens erstreckt/erstrecken. Hierdurch bleibt der Gleitrahmen als einstückiges Bauteil erhalten, so daß der Zusammenbau des Dichtungselementes erleichtert wird. Im übrigen wird mit einem oder mehreren derartigen Schlitzen nicht nur das Reibungsverhalten zwischen demn Gleitrahmen und dem Innenteil und dem Außenteil des Schwenkmotors verbessert, sondern es wird auch eine verbesserte und vereinfachte Montage des Dichtungselementes selbst sowie des Dichtungselementes im Schwnkmotor ermöglicht.

In diesem Zusammenhang sei noch erwähnt, daß es aus Montagegesichtspunkten besonders günstig ist, wenn das Dichtungs-Innenteil komplett einstückig ausgebildet ist, da hierdurch keine zusätzlichen, eigenständigen Bauteile benötigt werden. In diesem Falle ist das Dichtungs-Innenteil somit nicht nur in Radialrichtung sowie in Axialrichtung des Schwenkmotors einlagig ausgebildet, sondern auch in Umfangsrichtung desselben. Im Hinblick auf eine vereinfachte Fertigung des Dichtungs-Innenteiles als solches kann dieses jedoch alternativ in Umfangsrichtung des Schwenkmotors mehrlagig ausgebildet sein. Beispielsweise kann das Dichtungs-Innenteil quasi durch einen Blechstapel gebildet werden, wobei die besagten Durchbrüche oder Schlitze zur Erzielung der gewünschten Federelastizität in einzelne Bleche, die danach geeignet aufeinander gestapelt werden, vereinfacht eingebracht werden können. Die einzelnen Blechlagen des Blechstapels oder dgl. können dabei untereinander geeignet verbunden sein (bspw. durch Kleben oder Laserschweißen), sie können aber auch nur lose aufeinander aufliegen.

Weitere Ausgestaltungen und Vorteile der Erfindung werden durch die Beschreibung der Ausführungsbeispiele unter Bezugnahme auf die beigefügten Zeichnungen erläutert. Dabei zeigen:
- Figur 1: eine schematische Darstellung einer ersten Ausführungsform eines erfindungsgemäßen Dichtungselements in einer Längsansicht bei entfernten seitlichen Scheiben;
- Figur 2a-2c: drei Varianten der Ausführungsform aus Figur 1, gesehen aus Pfeilrichtung X;
- Figur 3: eine schematische Darstellung einer zweiten Ausführungsform in einer Ansicht gemäß Figur 1,
- Figur 4: eine Darstellung analog Figur 1 einer dritten Ausführungsform,
- Figur 5: eine Darstellung einer vierten vorteilhaften Ausführungsform in einer Längsansicht bei entfernten seitlichen Scheiben.

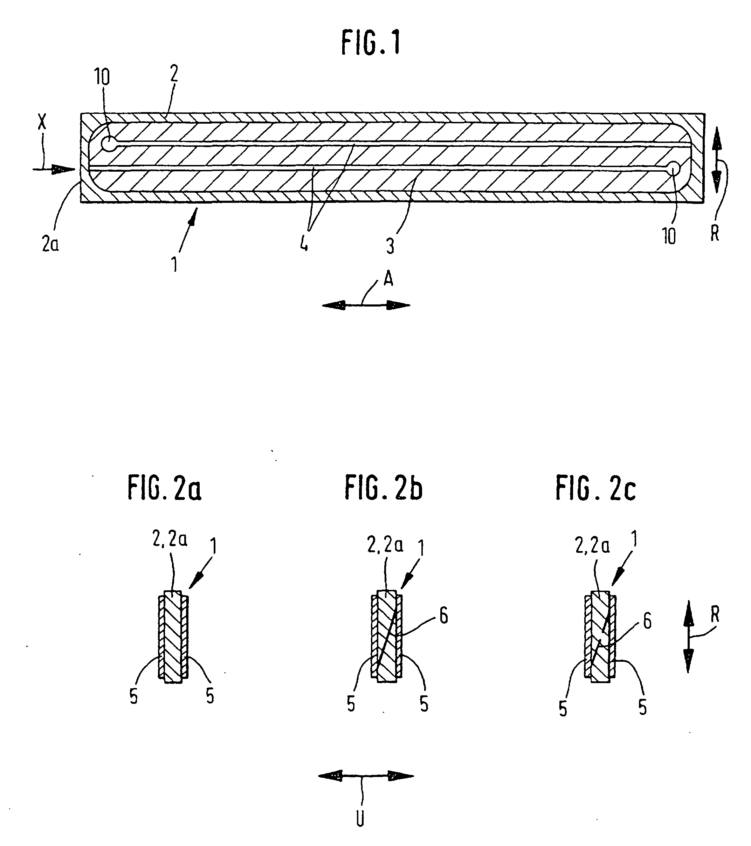

**Figur 1** zeigt eine erste Ausführungsform eines erfindungsgemäßen Dichtungselements 1, wobei dieses in Längsrichtung bzw. Axialrichtung A eines Schwenkmotors, in welchem dieses eingebaut wird, dargestellt ist, und wobei später erläuterte und in den Figuren 2a - 2c gezeigte Scheiben 5 entfernt sind. Wie ersichtlich weist das Dichtungselement 1 einen ring- oder rahmenförmigen Gleitrahmen 2 aus Kunststoff, insbesondere PTFE auf, der im wesentlichen eine längliche rechteckige Form aufweist. Im Inneren des Gleitrahmens 2 ist ein Dichtungs-Innenteil 3 bspw. aus Metall oder CFK oder anderen geeigneten Kunststoffen gefertigt, aufgenommen. Das im wesentlichen quaderförmige Dichtungs-Innenteil 3 schließt dabei mit seiner Außenkontur direkt an die Innenkontur des Gleitrahmens 2 an. Im übrigen ist neben der Axialrichtung A des Schwenkmotors noch dessen Radialrichtung R dargestellt, während sich die Umfangsrichtung U des Schwenkmotors bei der Darstellung nach den Figuren 1, 3 -5 senkrecht zur Zeichenebene erstreckt.

Das in Axialrichtung A sowie in Radialrichtung R betrachtet einlagige, d.h. in diesen Richtungen einstückige und somit in diesen genannten Richtungen nicht aus mehreren Teilen aufgebaute Dichtungs-Innenteil 3 weist zueinander parallele, in Axialrichtung A verlaufende Längs-Schlitze 4 auf, die einen sich in Umfangsrichtung des Schwenkmotors erstreckenden Durchbruch im Dichtungs-Innenteil 3 bilden und die jeweils an einem Ende in einer Durchgangsbohrung 10 münden. Durch die Schlitze 4 und die Durchgangsbohrungen 10 wird die Federelastizität des Dichtungs-Innenteils 3 wie gewünscht und wie weiter oben beschrieben eingestellt, d.h. in Schwenkmotor-Axialrichtung A zeigt das Dichtungs-Innenteil 3 nahezu keine Elastizität, wohingegen in Schwenkmotor-Radialrichtung R eine nennenswerte FederElastizität vorliegt. Resultierend hieraus wird der Gleitrahmen 2 dann mit seinen sich in Axialrichtung A erstreckenden Kanten sicher und stets - und dabei insbesondere unabhängig von Temperatureinflüssen - gegen die nicht dargestellten Oberflächen des Schwenkmotor-Innenteiles bzw. Schwenkmotor-Außenteiles gepreßt.

Über die Schlitze 4 und die (sich in Umfangsrichtung des Schwenkmotors ersteckenden) Durchgangsbohrungen 10 wäre das Dichtungselement 1 grundsätzlich seitlich durchlässig, was jedoch dessen Funktion zuwiderläuft. Daher sind zur seitlichen Abdichtung Scheiben 5 vorgesehen, die an den beiden von der Axialrichtung A sowie der Radialrichtung R aufgespannten Ebene erstreckenden Längsseiten des Dichtungselementes 1 angeordnet sind, wie dies in den **Figuren 2a bis 2c** dargestellt ist. Diese bspw. aus PTFE gefertigten sog. Beilegscheiben 5 überdecken dabei den Gleitrahmen 2 zumindest teilweise. Nachdem diese Scheiben 5 quasi schwimmend in der das Dichtungselement 1 aufnehmenden Nut (nicht gezeigt) im (nicht gezeigten) Schwenkmotor gelagert sind, werden sie durch den in den Schwenkmotor-Arbeitskammern - diese befinden sich in den Figuren 2a bis 2c in der hierin dargestellten Schwenkmotor-Umfangsrichtung U an den beiden Seiten des Dichtungselementes 1 - anliegenden Hydraulikdruck an den Gleitrahmen 2 angedrückt, so daß sie jeglichen Fluidübertritt zwischen den komplementären Schwenkmotor-Arbeitskammern gemäß Pfeilrichtung U durch das Dichtungselement 1 hindurch sicher unterbinden.

Im einzelnen zeigen die **Figuren 2a bis 2c** drei Varianten des Dichtungselementes aus Figur 1, und zwar gesehen aus Pfeilrichtung X. In der Variante gemäß **Figur 2a** ist dabei der Gleitrahmen 2 an allen Seitenflächen nicht unterbrochen, d.h. an den nicht sichtbaren längeren und auch an den kürzeren, in dieser Darstellung sichtbaren Stirnseiten 2a durchgehend ausgebildet. Bei der zweiten Variante gemäß **Figur 2b** weist der Gleitrahmen 2 an seiner (kürzeren) Stirnseite 2a einen schrägen durchgehenden Schlitz 6 auf. Beim Ausführungsbeispiel nach **Figur 2c** ist dieser Schlitz 6 unterbrochen, d.h. er erstreckt sich nicht über die gesamte (in Umfangsrichtung U gemessene) Breite des Gleitrahmens 2. Dieser (zumindest teilweise in Umfangsrichtung U verlaufende) Schlitz 6, von denen auch mehrere bzw. an jeder Seite/Kante des Gleitrahmens 2 einer vorgesehen sein können, bewirkt neben einer verbesserten Montage bzw. einem vereinfachten Zusammenbau des Dichtungselementes 1 ein verbessertes Temperaturdehnungsverhalten des Gleitrahmens 2 bzw. des gesamten Dichtungselementes 1, wie dies weiter oben bereits ausführlich erläutert wurde. Der oder die ggef mehreren besagten Schlitze 6 können im übrigen auch in axialer Richtung, d.h. auf der sich in Axialrichtung erstreckenden Längsseite des Dichtungselements 1, angebracht sein.

Zurückkommend auf den Aufbau des Dichtungs-Innenteiles 3 als solches kann dieses komplett einstückig sein. Wie vor der Figuren-Beschreibung bereits ausführlich erläutert wurde, ist es jedoch nur wesentlich, daß dieses Dichtungs-Innenteil in Axialrichtung A sowie in Radialrichtung R einlagig bzw. einstückig ausgebildet ist und somit in diesen beiden Richtungen betrachtet nicht aus mehreren Einzelteilen aufgebaut ist. In Umfangsrichtung U hingegen kann das Dichtungs-Innenteil 3 durchaus mehrteilig ausgebildet sein und somit bspw. durch einen Stapel aufeinander gelegter Bleche gebildet werden, d.h. quasi als Blechpaket ausgebildet sein. Diese einzelnen Bleche müssen dabei nicht fest miteinander verbunden sein, sondern werden zu Montagezwecken alleine durch den Gleitrahmen 2 zusammengehalten, während sie im Einbauzustand des Dichtungselementes 1 durch den in den Arbeitskammern des Schwenkmotors anliegenden Hydraulikdruck gegeneinander gepreßt werden.

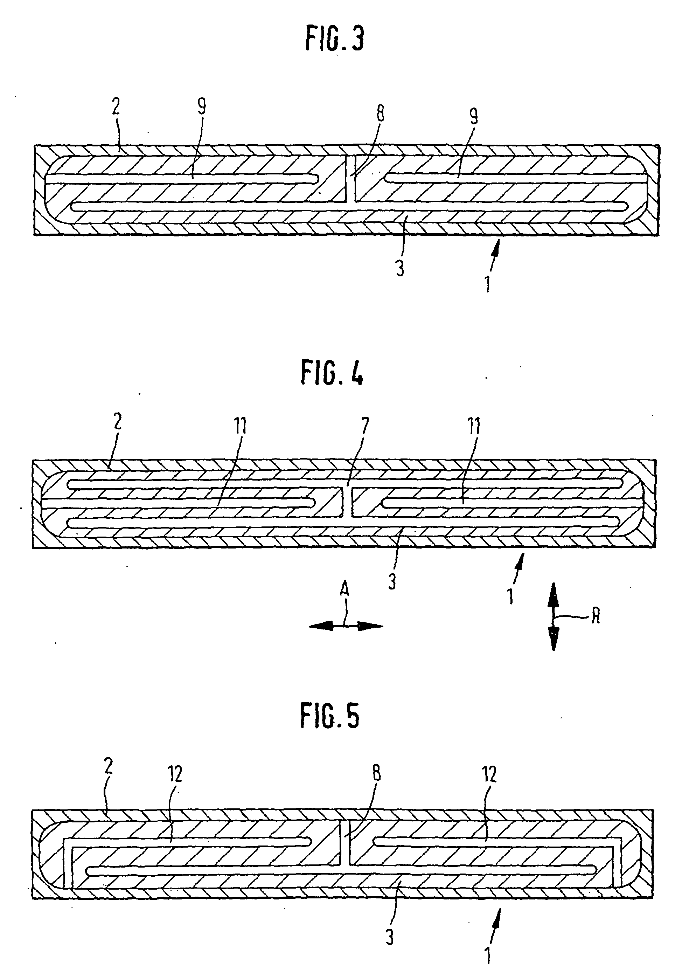

**Figur 3** zeigt eine zweite Ausführungsform eines erfindungsgemäßen Dichtungselements 1 in einer Ansicht analog Figur 1, d.h. mit entfernten seitlichen Scheiben 5. Auch hier ist ein Gleitrahmen 2 aus PTFE vorgesehen, der ein Dichtungs-Innenteil 3 vollständig umgibt. Dabei weist das Dichtungs-Innenteil 3 eine von der in Figur 1 dargestellten Ausführungsform unterschiedliche Loch- und Schlitzgeometrie auf. So ist im Zentrum des Dichtungs-Innenteils 3 eine T-förmige Durchbrechung 8 vorgesehen. Parallel zu den beiden T-Schenkeln dieser Durchbrechung 8 sind (ebenfalls einen Durchbruch bildende) Schlitze 9 angebracht, die jeweils an den Stirnseiten aus dem Dichtungs-Innenteil 3 austreten, wobei diese Gestaltung eine andere Federsteifigkeit bzw. Federcharakteristik erzeugt, als diejenige von Figur 1. Selbstverständlich ist auch das Dichtungselement 1 aus Figur 3 seitlich durch Scheiben 5 (nicht gezeigt) abgedichtet, ebenso wie dasjenige gemäß **Figur 4**, bei welchem im Dichtungs-Innenteil 3 eine H-förmige Durchbrechung 7 vorgesehen ist. Parallel zu den H-Schenkeln verlaufen dabei (ebenfalls einen Durchbruch bildende) Schlitze 11. Die Schlitze 11 treten aus den Stirnseiten an dem Übergang zu dem PTFE Gleitrahmen 2 aus.

Schließlich zeigt **Figur 5** (analog den Darstellungen der Figuren 1, 3, 4) eine vierte Ausführungsform eines erfindungsgemäßen Dichtungselements 1 mit einem Gleitrahmen 2 aus PTFE. Das Dichtungs-Innenteil 3 aus Metall oder CFK oder einem anderen geeigneten nicht-elastomeren Material weist dabei eine T-förmige Durchbrechung 8 und zwei L-förmige Schlitze 12 auf, die zunächst parallel zu den T-Schenkeln der T-förmigen Durchbrechung 8 in Axialrichtung A verlaufen und dann nach unten in Radialrichtung R rechtwinklig abknicken und aus dem Dichtungs-Innenteil 3 quasi austreten. Selbstverständlich ist auch dieses Dichtungselement 1 seitlich durch Scheiben 5 abgedichtet, so daß die eingangs erwähnten Arbeitskammern des Schwenkmotors, in welchem dieses Dichtungselement 1 eingebaut ist, gegeneinander abgedichtet sind.

Selbstverständlich sind eine Vielzahl weiterer Gestaltungen eines erfindungsgemäßen Dichtungselementes möglich, die unter den Inhalt der Patentansprüche fallen. Stets erhält man mit den erfindungswesentlichen Merkmalen ein für einen Schwenkmotor besonders vorteilhaftes Dichtungselement, das sich unter allen Betriebsbedingungen durch optimale Funktionserfüllung auszeichnet, und darüber hinaus nicht nur einfach in seinem Aufbau ist, sondern auch eine hohe Lebensdauer besitzt. Dabei sind prinzipiell auch andere sog. Spaltbilder für die Durchbrechungen oder Durchbrüche oder Schlitze möglich, d.h. grundsätzlich können geeignet verlaufende Spalte (= Durchbrüche) im Dichtungs-Innenteil 3 vorgesehen sein, mit Hilfe derer dessen Federelastizität wie gewünscht eingestellt werden kann, und zwar den jeweiligen Anforderungen entsprechend in Axialrichtung A und Radialrichtung R des Schwenkmotors unterschiedlich. Auch ist es möglich, diese sog. Spalte im Dichtungs-Innenteil 3 mittels einer geeigneten Dichtmasse abzudichten, die keine Auswirkung auf die Federelastizität hat, jedoch die genannten Scheiben 5 ersetzen kann.

## Patentansprüche

1. Dichtungselement für einen Schwenkmotor zur Abdichtung von zwischen einem insbesondere zylindrischen Außenteil und einem insbesondere zylindrischen Innenteil desselben begrenzten Arbeitskammern, wobei das Dichtungselement (1) in einer axial verlaufenden Nut aufgenommen ist, die in einem am Innenumfang des Außenteils oder am Außenumfang des Innenteils angeordneten Vorsprung ausgebildet ist und wobei das Dichtungselement (1) in Radialrichtung (R) des Schwenkmotors betrachtet einen zwischen dem Außenteil und dem Innenteil eingespannten Gleitrahmen (2) aus Kunststoff, insbesondere PTFE, sowie ein von diesem umgebenes Dichtungs-Innenteil (3) aufweist,
**dadurch gekennzeichnet, daß**
die Außenkontur des in Radialrichtung (R) sowie in Axialrichtung (A) des Schwenkmotors einlagigen, zumindest teilweise federelastischen, nicht-elastomeren Dichtungs-Innenteils (3) der Innenkontur des Gleitrahmens (2) entspricht und an dieser direkt anliegt.

2. Dichtungselement für einen Schwenkmotor nach Anspruch 1,
**dadurch gekennzeichnet, daß**
das Dichtungs-Innenteil (3) über seinem Umfang eine unterschiedliche Steifigkeit aufweist.

3. Dichtungselement für einen Schwenkmotor nach einem der vorangehenden Ansprüche,
**dadurch gekennzeichnet, daß**
das Dichtungs-Innenteil (3) Schlitze (4, 9, 11, 12) und/oder Durchbrechungen (7, 8) aufweist.

4. Dichtungselement für einen Schwenkmotor nach einem der vorangehenden Ansprüche,
**dadurch gekennzeichnet, daß**
zur seitlichen Abdichtung des Dichtungselements (1) Scheiben (5) an dessen Längsseiten angeordnet sind.

5. Dichtungselement für einen Schwenkmotor nach einem der vorangehenden Ansprüche,
**dadurch gekennzeichnet, daß**
der Gleitrahmen (2) zumindest einen zumindest teilweise in Umfangsrichtung des Schwenkmotors verlaufenden Schlitz (6) aufweist.

6. Dichtungselement für einen Schwenkmotor nach Anspruch 5,
**dadurch gekennzeichnet, daß**
der Schlitz (6) unterbrochen ist und sich somit nicht über die gesamte Breite des Gleitrahmens erstreckt.

7. Dichtungselement für einen Schwenkmotor nach einem der vorangegangenen Ansprüche,
**dadurch gekennzeichnet, daß**
das Dichtungs-Innenteil in Umfangsrichtung des Schwenkmotors mehrlagig ausgebildet ist.

## Claims

1. A sealing element for a rotary engine for sealing working chambers delimited between a more especially cylindrical outer part and a more especially cylindrical inner part thereof, wherein the sealing element (1) is received in an axially extending groove, which is formed in a projection arranged at the inner periphery of the outer part or at the outer periphery of the inner part and wherein the sealing element (1), viewed in the radial direction (R) of the rotary engine, has a sliding frame (2) fixed between the outer part and the inner part, made of plastics material, more especially PTFE, as well as a seal inner part (3) surrounded thereby, **characterised in that** the outer contour of the at least partially spring-elastic, non-elastomeric seal inner part (3), which is single-layered in the radial direction (R) and in the axial direction (A) of the rotary engine, corresponds to the inner contour of the sliding frame (2) and rests directly thereon.

2. A sealing element for a rotary engine according to claim 1, **characterised in that** the seal inner part (3) has a different stiffness over its periphery.

3. A sealing element for a rotary engine according to any one of the preceding claims, **characterised in that** the seal inner part (3) has slots (4, 9, 11, 12) and/or openings (7, 8).

4. A sealing element for a rotary engine according to any one of the preceding claims, **characterised in that** discs (5) are arranged for the lateral sealing of the sealing element (1), on the longitudinal sides thereof.

5. A sealing element for a rotary engine according to any one of the preceding claims, **characterised in that** the sliding frame (2) has at least one slot (6) which runs at least partially in the peripheral direction of the rotary engine.

6. A sealing element for a rotary engine according to claim 5, **characterised in that** the slot (6) is interrupted and does not therefore extend over the entire width of the sliding frame.

7. A sealing element for a rotary engine according to any one of the preceding claims, **characterised in that** the seal inner part is multi-layered in the peripheral direction of the rotary engine.

## Revendications

1. Elément de joint d'étanchéité pour un moteur oscillant, destiné à isoler hermétiquement des chambres de travail délimitées entre une partie extérieure, notamment cylindrique, et une partie intérieure, notamment cylindrique, de ce moteur, l'élément de joint (1) étant logé dans une rainure s'étendant axialement et formée dans une protubérance disposée à la périphérie intérieure de la partie extérieure ou à la périphérie extérieure de la partie intérieure, et l'élément de joint (1) présentant, dans la direction radiale (R) du moteur oscillant, un cadre de glissement (2) en matière plastique, notamment en PTFE, serré entre la partie extérieure et la partie intérieure, ainsi qu'une partie intérieure (3) de joint entourée par ce cadre,
**caractérisé en ce que**
le contour extérieur de la partie intérieure (3) du joint, monocouche dans la direction radiale R ainsi que dans la direction axiale A du moteur oscillant, et au moins partiellement élastique à la façon d'un ressort, non élastomère, correspond au contour intérieur du cadre de glissement (2) et s'appuie directement contre ce contour.

2. Elément de joint d'étanchéité pour un moteur oscillant selon la revendication 1,
**caractérisé en ce que**
la partie intérieure (3) du joint présente une raideur variable sur sa périphérie.

3. Elément de joint d'étanchéité pour un moteur oscillant selon une des revendications précédentes,
**caractérisé en ce que**
la partie intérieure (3) du joint présente des fentes (4, 9, 11, 12) et/ou des ouvertures (7, 8).

4. Elément de joint 'étanchéité pour un moteur oscillant selon une des revendications précédentes,
**caractérisé en ce que**
pour l'étanchéité latérale de l'élément de joint (1), des plaques (5) sont disposées le long des côtés longitudinaux de cet élément.

5. Elément de joint d'étanchéité pour un moteur oscillant selon une des revendications précédentes,
**caractérisé en ce que**
le cadre de glissement (2) présente au moins une fente (6) qui s'étend au moins partiellement dans la direction circonférentielle du moteur oscillant.

6. Elément de joint d'étanchéité pour un moteur oscillant selon la revendication 5,
**caractérisé en ce que**
la fente (6) est interrompue et, de cette façon, ne s'étend pas sur toute la largeur du cadre de glissement.

7. Elément de joint d'étanchéité pour un moteur oscillant selon une des revendications précédentes,
**caractérisé en ce que**
la partie intérieure du joint est à plusieurs couches dans la direction circonférentielle du moteur oscillant.
